# NEW EUROPEAN PATENT SPECIFICATION

(11) **EP 1 207 389 B2**
(45) Date of publication and mention of the opposition decision: **18.02.2009**
(45) Mention of the grant of the patent: 11.01.2006
(21) Application number: 01125451.3
(22) Date of filing: 05.11.2001
(51) Int. Cl.: G01N 31/16, G01N 33/18

(54) **Karl-Fischer-Reagent**
Karl-Fischer-Reagenz
Réactif de Karl-Fischer

(30) Priority: 15.11.2000 DE 10056547
(43) Date of publication of application: 22.05.2002
(73) Proprietor: Sigma-Aldrich Laborchemikalien GmbH, 30926 Seelze (DE)
(72) Inventor: Schöffski, Katrin Dr., 30163 Hannover (DE); Hoffmann, Helga, 31515 Wunstorf (DE)
(74) Representative: Bublak, Wolfgang

(56) References cited:
- WO-A-00/72003
- US-A- 5 139 955
- US-A- 5 567 618
- US-A- 5 962 328
- MACLEOD S K: "MOISTURE DETERMINATION USING KARL FISCHER TITRATIONS" ANALYTICAL CHEMISTRY, AMERICAN CHEMICAL SOCIETY. COLUMBUS, US, vol. 63, no. 10, 15 May 1991 (1991-05-15), pages 557A-558A,560-6A, XP000217463 ISSN: 0003-2700

## Description

The present invention relates to a one component reagent for the determination of water according to the method of Karl Fischer, and its use for the determination of the water content according to the method of Karl Fischer.

Volumetric analysis of water was developed by Karl Fischer; it is based on the oxidation of sulfur dioxide by iodine in the presence of water according to the following equation

2 H₂O + SO₂ + I₂ ↔ H₂SO₄ + 2 HJ

Usually, the Karl Fischer titration is performed in the presence of an alcohol as solvent and a base, with the following reaction presumed to occur:

H₂O + I₂ + (RNH) SO₃-R' + 2 RN ↔ (RNH)SO₄ + 2 (RNH)I

with RN = base; R' = alkyl (optionally substituted).

It is assumed that within the reagent an alkyl ester of sulfuric acid is formed from alcohol and sulfur dioxide. The latter is oxidized under consumption of stochiometric amounts of water by iodine to the corresponding sulfuric acid alkyl ester. In practice, as alcohol components mainly methanol and glycol monoalkyl ether are used (compare *E. Scholz "Karl Fischer-Titration ", Springer Verlag 1984*). The alcohol used does not only serve as a solvent but also participates in the reaction and hence influences the titration behavior of the reagents produced therewith. The end point of the titration can be recognized by an excess of iodine, which may be indicated visually, photometrically or electro-magnetically, by a potentiometric recognition of the end point or by a dead-stop indication leading to substantially more thorough results.

There are four different basic forms of the titration according to Karl Fischer, namely the volumetric titration using a one component reagent, volumetric titration with a two component reagent and colometric titration with and without diaphragm. These four variants require different reagents.

For the one component titration a reagent is necessary which keeps all reaction partners of water in one solution. For the latter purpose, sulfur dioxide, iodine and the base are dissolved in an alcohol. In this solution, sulfur dioxide and alcohol already react after being put together to alkyl sulfite. The base accepts the released proton. In the original reagent made by Karl Fischer, methanol was used as alcohol component. Later on, more stable reagents were yielded by using methyl glycol. In all one component reagents the titrimetric substance, *i*.*e*., the concentration of active iodine, decreases with time. As solvent for the sample in the titration beaker most of the times methanol or a mixture of methanol and other solvents is used.

For the two component titration, two reagents are necessary. As titration component, a solution of iodine in methanol is used, whereas a solution of sulfur dioxide and a base in methanol serves as solvent. In the latter solvent also a one component reagent, alkyl sulfite, is formed. The solvent component is placed in the titration beaker and subsequently titration is performed using the titration component. In contrast to the one component titration, in two component titration a decrease of the normality of the titration component does not occur, as long as no humidity penetrates into the flask.

The reagents used for the colometric determination of water according to Karl Fischer are different concerning their constituents from the volumetric reagents. Instead of iodine, soluble iodide is used, from which during titration iodine is formed by anodic oxidation, which reacts in analogy to the above-described reaction scheme. The further constituents of the reagents are the same as in the volumetric reagents, *i*.*e*., sulfur dioxide, a base and an alcohol. In case of the colometric titration with diaphragm, the cathode and anode space are separated by means of a diaphragm in the cell. Both spaces have to be filled up with reagent separately, with the cathode space usually being provided with a special cathode reagent. In case of colometric titration without diaphragm, a separation of cathode and anode space is not necessary because the particular geometry of the cathode avoids the formation of substances that might be oxidized.

In a reagent according to Karl Fischer a base serves the function to neutralize the acid which is produced, thereby facilitating a quantitative reaction. In former times, pyridine was used as a base in practice. Looking for toxicologically acceptable, non-harmful bases, EP-B-0 127 740 describes as further suitable bases imidazole, thiazole, pyrimidine, triazine or substitution products thereof. If imidazole was used in one component reagents, however, it was observed that upon longer storage times, especially at higher temperatures as occurring in hot countries, undesirable precipitations or crystals were formed, which led to problems in the flexible tube systems of the apparatus used for Karl Fischer determinations. In order to prevent these precipitations, the Ph.D. thesis of Silke Grünke, Chemistry Department of the University of Hannover, 1999, Chapter 7, proposes to use a substituted imidazole, such as 2-methylimidazole in one component reagents instead of imidazole. However, when using this substituted imidazole, a rapid decay of normality is observed, leading to the situation that such one component reagents are not stable upon storage. Further documents disclosing imidazole, its acid addition salts or derivatives as a base in Karl Fischer reagents are US-A-5567618, US-A-5139955 and WO-A-00/72003. Consequently, the problem underlying the present invention was to provide an improved Karl Fischer reagent which is stable upon storage as a one component reagent and which especially at high temperatures does not tend to precipitate. At the same time, the titrimetric stability of the reagents used so far shall at least be reached or even be improved.

As a solution to this problem it is proposed that a Karl Fischer reagent contains as base a mixture of imidazole and at least one substituted imidazole.

Therefore, the present invention relates to a one component reagent for the determination of water according to the Karl Fischer method as defined in claim 1. Further, the invention relates to a method for the quantitative determination of water according to the Karl Fischer method which is characterized by the fact that the reagent according to the invention is used. Furthermore, the invention relates to the use of a mixture of imidazole and at least one substituted imidazole in a one component reagent for the determination of water according to the Karl Fischer method, containing beside the mixture of imidazole and at least one substituted imidazole, sulfur dioxide, iodine and a water-free alcohol. Preferred embodiments of the invention are defined in the description, the examples and the subclaims.

The reagent according to the invention contains a mixture of imidazole and at least one substituted imidazole. Preferably, the substituted imidazole is a compound having the following formula 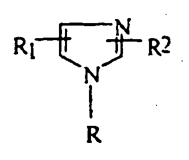 where R, R¹ and R² are identical or different from each other and mean in particular a hydrogen atom, a lower alkyl residue which preferably contains 1 to 4 carbon atoms, or a phenyl residue. In the present invention, substituted imidazoles containing 1, 2 or 3 alkyl residues containing 1-4 carbon atoms or containing 1, 2 or 3 phenyl residues or a benzo group, are preferred. Examples for compounds which are suitable for use in the present invention are mainly 1-methylimidazole, 1-ethylimidazole, 1-propylimidazole, 1-butylimidazole, 2-methylimidazole, 2-ethylimidazole, 2-propylimidazole, 2-butylimidazole, 4-methylimidazole, 4-butylimidazole, N-methylimidazole, 1,2-dimethylimidazole, 1,2,4-trimethylimidazole, 1-phenylimidazole, 2-phenylimidazole and benzimidazole. Particularly preferred are 2-methylimidazole, 2-ethylimidazole, or a mixture thereof, with 2-methylimidazole being most preferred because it is the least harmful to the health. The substituted imidazoles mentioned above may be present as single component or in a mixture of at least two or more thereof or in a mixture with other bases which are suitable for Karl Fischer titration and which are known from the prior art, as for example pyridine, diethanol amine, dipyridyl propane and/or benzoate. The molar ratio of imidazole to substituted imidazole is in the range of 0.3 : 2 to 2 : 0.3, especially from 0.5 : 1.5 to 1.5 : 0.5, more preferred is from 1 : 1.3 to 1.3 : 1.

Besides the base, the reagent in addition contains at least the usual constituents of a Karl Fischer reagent, in particular a solvent, sulfur dioxide and iodine. The mentioned constituents are all contained in an amount that is usual for Karl Fischer reagents.

As a solvent for the reagent according to the invention, it is useful to employ a water-free alcohol, preferably an ethyl glycol monoalkylether with a lower alkyl group, preferably containing 1 to 5 carbon atoms, especially a diethylene glycol monoalkylether with a lower alkyl group, preferably with 1 to 5 carbon atoms; a propyl glycol monoalkylether with a lower alkyl residue, preferably with 1 to 5 carbon atoms; or a mixture thereof. Alcohols particularly useful are the above mentioned ethylene glycol monoalkylethers, especially diethylene glycol monethylether (DEGEE), or the propylene glycol monoalkylethers, the latter especially as defined in DE-A 197 40 965. In addition, as solvents also methanol, propanol, 2-methoxyethanol or tetrahydrofurfuryl alcohol are useful. The mentioned alcohols may be present as single constituent or in a mixture of at least two or more thereof. Most preferred are the above-mentioned ethylene glycol monoalkylethers, especially the diethylene glycol monoalkylethers thereof, as for example, diethylene glycol monoethylether. Preferably, alcohol is used in an amount of 30 to 80 weight-%, preferably 50 to 70 weight-%, in relation to the entire weight of the reagent.

The molar ratio of base to sulfur dioxide in the reagent in a useful embodiment lies in the range of 10 : I to 0.3 : 1, preferably from 2 : 1 to 0.5 : 1.

The reagent according to the invention is present as a one component reagent, which contains beside the base at least sulfur dioxide, iodine, and a solvent, in particular a water-free alcohol, preferably as defined hereinabove. The amounts used are those usual for a single component reagent, for example from 0.2 to 3 mole/l sulfur dioxide, 0.2 to 6 mole/l base and 0.05 to 1 mole/I iodine.

The reagent according to the invention is preferably manufactured by dissolving the base, the sulfur dioxide and the iodine in the solvent, optionally under cooling to a temperature of 15 to 50°C, preferably to a temperature of 20 to 40°C. The amount of base used usefully ranges from 0.1 to 10 moles, preferably from 0.5 to 5 moles, the amount of sulfur dioxide from 0.1 to 10 moles, preferably 0.5 to 3 moles and the amount of iodine used from 0.01 to 3 moles, preferably from 0.1 to 1 mole, all values being related to 1 litre of solution. The manufacture of the solution is performed in a usual manner under the exclusion of air humidity using purified starting materials.

For the water determination according to the Karl Fischer method the reagents according to the invention are employed in a usual manner. In the titration cell, a working medium which may be equal to the solvent or reagent or be different thereof, as for example methanol, is placed. Subsequently, the prepared solution is titrated with the reagent according to the invention as a standard. Then, a sample the water content of which has to be determined is weighed and titrated in a usual manner.

Using the reagent according to the invention, the water content of samples as, for example, solid or liquid substances may be determined, as, for example, of salts, organic solvents, fats, oils, nutrients and pharmaceutical preparations.

The reagents according to the invention may also be combined with conventional Karl Fischer reagents.

A particularly preferred reagent contains: 1-1.3 mole/l imidazole, 0.8-1.3 mole/l 2-methylimidazole, 0.3 mole/I hydroiodic acid, 1.0-1.3 mole/I sulfur dioxide and 0.08 to 0.4 mole/l (depending on the normality of the reagent) iodine, which is filled up with diethylene glycol monoethylether to I litre.

The invention also relates to the use of a mixture of imidazole and at least one substituted imidazole contained in a one component reagent for the determination of water according to the Karl Fischer method, containing beside the mixture of imidazole and at least one substituted imidazole, sulfur dioxide, iodine and a water-free alcohol. In particular, the latter is a mixture of imidazole and substituted imidazole as defined hereinabove. The alcohol preferably is an alcohol as defined hereinabove.

The reagent according to the invention is characterized by a high storage stability, especially also at higher temperature, which, for example, occurs in hot countries. The storage stability is evaluated with respect to the normality and the homogeneity of the reagent. Crystal formation within the reagent makes the latter useless because the flexible tubes of the titration apparatus will clog if crystals are present. A strong decrease in normality makes the reagent useless because the velocity of titration decreases and the amount of reagent used becomes too high. A particular advantage of the reagent according to the invention is the fact that no crystal formation happens within the reagent, whereas the normality merely shows a low decrease, also upon longer storage periods.

The following examples which embody preferred embodiments of the invention explain the invention in more detail.

### Examples

1. Comparative reagent 1 (containing imidazole)

| | |
|---|---|
| Imidazole | 2.0 mole/l |
| Imidazole hydroiodide | 0.3 mole/l |
| Sulfur dioxide | 1.0 mole/l |
| Iodine | 0.4 mole/l |
| Diethylene glycol monoethylether | 800 g |

2. Comparative reagent 2 (containing 2-methylimidazole)

| | |
|---|---|
| 2-methylimidazole | 2.0 mole/l |
| 2-methylimidazole hydroiodide | 0.3 mole/l |
| Sulfur dioxide | 1.0 mole/l |
| Iodine | 0.4 mole/l |
| Diethylene glycol monoethylether | 760 g |

3. Comparative reagent 3 (containing ethylimidazole)

| | |
|---|---|
| 2-ethylimidazole | 2.0 mole/l |
| 2-methylimidazole hydroiodide | 0.3 mole/l |
| Sulfur dioxide | 1.0 mole/l |
| Iodine | 0.4 mole/l |
| Diethylene glycol monoethylether | 720 g |

4. Reagent 1 according to the invention (containing imidazole/2-methylimidazole)

| | |
|---|---|
| Imidazole | 1.0 mole/l |
| 2-methylimidazole | 1.0 mole/l |
| Imidazole hydroiodide | 0.3 mole/l |
| Sulfur dioxide | 1.0 mole/l |
| Iodine | 0.4 mole/l |
| Diethylene glycol monoethylether | 760 g |

5. Reagent 2 according to the invention (containing imidazole/2-ethylimidazole)

| | |
|---|---|
| Imidazole | 1.0 mole/l |
| 2-ethylimidazole | 1.0 mole/l |
| 2-ethylimidazole hydroiodide | 0.3 mole/l |
| Sulfur dioxide | 1.0 mole/l |
| Iodine | 0.4 mole/l |
| Diethylene glycol monoethylether | 780 g |

All reagents were checked for their storage stability. Both, crystal formation and decrease in normality were determined at certain points of time.

### Crystal formation:

50 ml of the reagent were mixed with 0.2 ml of water and stored at room temperature.

| **Homogeneity** | **Example 1** | **Example 2** | **Example 3** | **Example 4** | **Example 5** |
|---|---|---|---|---|---|
| After 1 week | Low amount of crystals | No crystals | No crystals | No crystals | No crystals |
| After 3 weeks | Many crystals | No crystals | No crystals | No crystals | No crystals |
| After 3 months | Many crystals | No crystals | No crystals | No crystals | No crystals |

### Stability of the titration compound:

Determining the decrease of normality of the titration compound, which was performed in the usual manner, methanol was used as working medium.

| **Decrease in normality** | **Example I** | **Example 2** | **Example 3** | **Example 4** | **Example 5** |
|---|---|---|---|---|---|
| After 1 week | 0,40% | 1,97% | 0,60% | 0,40% | 0,38% |
| After 4 weeks | 1,09% | 2,99% | 1,79% | 1,55% | 1,46% |
| After 4 months | 6,3% | 23,9% | 21,3% | 9,6% | 10,1% |

Comparative reagent 1 shows a very good stability of the titrimetric compound, however, in the presence of humidity it forms crystals quite rapidly. After formation of crystals it cannot be used anymore.

Comparative reagents 2 and 3 do not form any crystals in the presence of humidity, however, they show a high decrease in normality of more than 20% of the original normality after four months. After this time, they cannot be used anymore.

In contrast to the latter, the reagents according to the invention 1 and 2 do not show any crystal formation and, in addition, a good stability of normality.

The examples show that the reagents according to the invention show optimum storage stability if they are used as a mixture containing imidazole and a substituted imidazole as base.

## Claims

1. One component reagent for the determination of water according to the Karl Fischer method which contains beside the base at least sulfur dioxide, iodine and a solvent, **characterized in that** it contains as base a mixture of imidazole and at least one substituted imidazole, wherein the molar ratio of imidazole to substituted imidazole lies in the range of 0.3 : 2 to 2 : 0.3.

2. Reagent according to claim 1, **characterized in that** the substituted imidazole contains 1, 2 or 3 alkyl residues with 1-4 C-atoms or 1, 2 or 3 phenyl residues or a benzo group.

3. Reagent according to claim 1 or 2, **characterized in that** the substituted imidazole is 2-methylimidazole or 2-ethylimidazole.

4. Reagent according to one of the preceding claims, **characterized in that** it contains a water-free alcohol.

5. Reagent according to one of the preceding claims, **characterized in that** it contains as a solvent at least one water-free alcohol selected from an ethyl glycol monoalkylether containing an alkyl residue with 1-5 C-atoms, a propylene glycol monoalkylether containing an alkyl group with 1 to 5 C-atoms and a mixture thereof.

6. Method for the quantitative determination of water according to the Karl Fischer method, **characterized in that** a reagent according to one of the preceding claims is used.

7. Use of a mixture of imidazole and at least one substituted imidazole as defined in one of claims 1 to 3 as base in a one component reagent for the determination of water according to the Karl Fischer method wherein said one component reagent contains beside the base at least sulfur dioxide, iodine and a water-free alcohol.

## Patentansprüche

1. Einkomponenten-Reagenz zur Bestimmung von Wasser gemäß dem Karl-Fischer-Verfahren, welches neben der Base mindestens Schwefeldioxid, Jod und ein Lösungsmittel enthält, **dadurch gekennzeichnet, dass** es als Base eine Mischung von Imidazol und mindestens einem substituierten Imidazol enthält, wobei das Molverhältnis von Imidazol zu substituiertem Imidazol in dem Bereich von 0,3:2 bis 2:0,3 liegt.

2. Reagenz nach Anspruch 1, **dadurch gekennzeichnet, dass** das substituierte Imidazol 1, 2 oder 3 Alkylreste mit 1-4 C-Atomen oder 1, 2 oder 3 Phenylreste oder eine Benzogruppe enthält.

3. Reagenz nach Anspruch 1 oder 2, **dadurch gekennzeichnet, dass** das substituierte Imidazol 2-Methylimidazol oder 2-Ethylimidazol ist.

4. Reagenz nach einem der vorstehenden Ansprüche, **dadurch gekennzeichnet, dass** es einen wasserfreien Alkohol enthält.

5. Reagenz nach einem der vorstehenden Ansprüche, **dadurch gekennzeichnet, dass** es als Lösungsmittel mindestens einen wasserfreien Alkohol enthält, der aus einem Ethylglycolmonoalkylether enthaltend einen Alkylrest mit 1-5 C-Atomen, einem Propylenglycolmonoalkylether enthaltend eine Alkylgruppe mit 1 bis 5 C-Atomen, und einer Mischung davon gewählt ist.

6. Verfahren zur quantitativen Bestimmung von Wasser gemäß dem Karl-Fischer-Verfahren, **dadurch gekennzeichnet, dass** ein Reagenz gemäß einem der vorstehenden Ansprüche verwendet wird.

7. Verwendung einer Mischung von Imidazol und mindestens einem substituierten Imidazol, wie sie in einem der Ansprüche 1 bis 3 definiert ist, als Base in einem Einkomponenten-Reagenz zur Bestimmung von Wasser gemäß dem Karl-Fischer-Verfahren, wobei das Einkomponenten-Reagenz neben der Base mindestens Schwefeldioxid, Jod und einen wasserfreien Alkohol enthält.

## Revendications

1. Un réactif à un composant pour le dosage de l'eau par la méthode de Karl Fischer, qui contient en sus de la base au moins du dioxyde de soufre, de l'iode et un solvant, **caractérisé en ce qu'**il contient en tant que base un mélange d'imidazole et d'au moins un imidazole substitué, où le rapport molaire de l'imidazole à l'imidazole substitué est compris dans la plage de 0,3:2 à 2:0,3.

2. Réactif selon la revendication 1, **caractérisé en ce que** l'imidazole substitué contient 1, 2 ou 3 résidus alkyle ayant 1 à 4 atomes de carbone ou 1, 2 ou 3 résidus phényle, ou un groupe benzo.

3. Réactif selon la revendication 1 ou 2, **caractérisé en ce que** l'imidazole substitué est le 2-méthylimidazole ou le 2-éthylimidazole.

4. Réactif selon l'une des revendications précédentes, **caractérisé en ce qu'**il contient un alcool anhydre.

5. Réactif selon l'une des revendications précédentes, **caractérisé en ce qu'**il contient en tant que solvant au moins un alcool anhydre choisi parmi un éther monoalkylique de l'éthylglycol contenant un résidu alkyle ayant 1 à 5 atomes de carbone, un éther monoalkylique du propylène-glycol contenant un groupe alkyle ayant 1 à 5 atomes de carbone, et un mélange de ceux-ci.

6. Procédé de dosage quantitatif de l'eau par la méthode de Karl Fischer, **caractérisé en ce qu'**on y utilise un réactif selon l'une des revendications précédentes.

7. Utilisation d'un mélange d'imidazole et d'au moins un imidazole substitué selon l'une des revendications 1 à 3 en tant que base dans un réactif à un composant pour le dosage de l'eau par la méthode de Karl Fischer, où ledit réactif à un composant contient en sus de la base au moins du dioxyde de soufre, de l'iode et un alcool anhydre.
